# EUROPÄISCHE PATENTSCHRIFT

(11) **EP 1 351 002 B1**
(45) Veröffentlichungstag und Bekanntmachung des Hinweises auf die Patenterteilung: **11.10.2006**
(21) Anmeldenummer: 03007433.0
(22) Anmeldetag: 03.04.2003
(51) Int. Cl.: F16L 11/08

(54) **Schlauch zur Durchleitung eines flüssigen Mediums**
Hose for conveying a liquid medium
Tuyau souple pour le transport d'un milieu liquide

(30) Priorität: 05.04.2002 DE 20205321 U
(43) Veröffentlichungstag der Anmeldung: 08.10.2003
(73) Patentinhaber: Meister, Winfried, 42369 Wuppertal (DE)
(72) Erfinder: Meister, Winfried, 42369 Wuppertal (DE)
(74) Vertreter: Patentanwälte Dr. Solf & Zapf

(56) Entgegenhaltungen:
- EP-A- 0 794 377
- EP-A- 1 156 252
- DE-A- 19 727 142
- DE-A- 19 803 656
- DE-U- 20 114 122

## Beschreibung

Die Erfindung betrifft einen Schlauch zur Durchleitung eines flüssigen Mediums, vorzugsweise von Wasser, bestehend aus einer einen Hohlraum umschließenden Hülle mit einem mehrlagigen Aufbau, wobei die Hülle einen durchgehenden Innenschlauch aufweist, der von einer Zwischenschicht umschlossen ist, die ein Kettengewirk trägt, das von einem Außenmantel umfaßt ist.

Üblicherweise werden die Schläuche einendig an einer Wasseranschlußstelle angeschlossen und anderendig z.B. mittels einer manuell zu betätigenden Wasserspritze verschlossen. Dabei wird beobachtet, dass sich die Schläuche bei Öffnen der Wasseranschlußstelle derart verwinden, daß sogar Knickstellen entstehen, durch die der Wasserfluß stark behindert oder unterbrochen wird. Durch einen mehrlagigen Aufbau wird versucht, dem entgegenzuwirken. Nachteilig bei diesen Schläuchen ist, dass bei Aufbringen eines Kettengewirks eine Drallausbildung des Schlauches bewirkt wird.

Die Druckschrift DE 19727142 A offenbart einen gattungsbildenden Wasserschlauch mit verbessertem Druck- und Torsionswiderstandsverhalten. Erreicht wird dies durch einen mehrlagigen Aufbau mit zwei durch eine Zwischenlage getrennten Verstärkungsschichten, wobei die innere Verstärkungsschicht aus einem geflochtenen Polyestergewebe besteht Die für ein Geflecht typische Fadenverkreuzung kommt durch abwechselndes Über- und Unterflechten der Flechtfäden zustande, wodurch sich der Bewicklungsvorgang aufwändig gestaltet und an den Kreuzungspunkten Schwächungen durch Einschnürungen auftreten können.

Der Erfindung liegt die Aufgabe zugrunde, einen verbesserten Schlauch zur Verfügung zu stellen, der im wesentlichen drallfrei ist.

Erfindungsgemäß wird dies dadurch erreicht, dass die Zwischenschicht zumindest ein Kreuzgelege aufweist, das zumindest kraftschlüssig mit dem Innenschlauch verbunden ist und aus zwei Fäden gebildet ist, die zueinander gegenläufig spiralartig auf den Außenumfang des Innenschlauches gewickelt sind.

Der Erfindung liegt die Erkenntnis zugrunde, dass der mehrlagige Aufbau mit dem konzentrisch zu einer Längsachse X-X der Hülle angeordneten inneren Kreuzgelege eine Drallausbildung, die durch das Aufbringen des Kettengewirkes bewirkt würde, verhindert wird.

Weitere vorteilhafte Ausgestaltungen des Schlauches sind in den Unteransprüchen offenbart und werden anhand der Zeichnung in der folgenden Beschreibung erläutert.

Es zeigt:

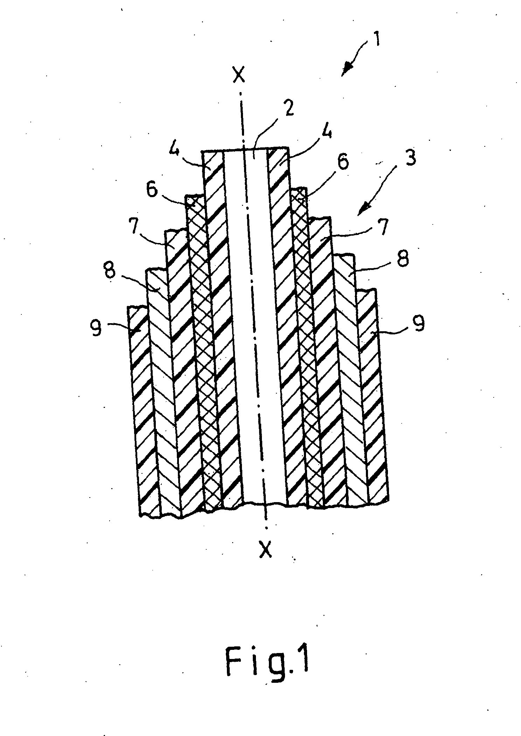

- Fig. 1: einen Längsschnitt durch den Schlauch.

Figur 1 zeigt einen erfindungsgemäßen Schlauch 1 bestehend aus einer einen Hohlraum 2 umschließenden Hülle 3 mit einer Längsachse X-X. Die Hülle 2 besitzt einen durchgehenden Innenschlauch 4. Der Innenschlauch 4 weist auf seinem Außenumfang eine Zwischenschicht auf, die in diesem Ausführungsbeispiel aus einem Kreuzgelege 6 und einer Zwischenlage 7 gebildet ist. Das Kreuzgelege 6 ist unmittelbar auf dem Innenschlauch 4 angeordnet und von der Zwischenlage 7 umschlossen. Die Zwischenlage 7 trägt auf ihrem Außenumfang ein Kettengewirk 8, welches von einem Außenmantel 9 umschlossen ist. Der Innenschlauch 4 sowie das Kreuzgelege 6, die Zwischenlage 7, das Kettengewirk 8 und der Außenmantel 9 sind jeweils konzentrisch zur Längsachse X-X angeordnet.

Das Kreuzgelege 6 ist in dem dargestellten Ausführungsbeispiel aus zwei Fäden gebildet, die zueinander gegenläufig spiralartig um die Längsachse X-X auf dem Außenumfang des Innenschlauches 4 gewickelt sind. Hierbei kreuzen sich die beiden Fäden vorzugsweise in einem Winkel von 54,44°, dem sogenannten neutralen Winkel. Andere Kreuzungswinkel sind ebenfalls möglich, wobei mit dem Kreuzungswinkel die Innendruckbeständigkeit des Schlauches beeinflußbar ist. In dem dargestellten Ausführungsbeispiel sind die Fäden mittels Maschinen unter minimaler Vorspannung auf den Außenumfang des Innenschlauchs 4 gelegt, so dass durch die Vorspannung eine kraftschlüssige Fixierung des Kreuzgeleges 6 auf dem Innenschlauch 4 erfolgt. Nachdem das Kreuzgelege 6 auf den Innenschlauch 4 gelegt ist, kann dieser z.B. durch einen Heiztunnel geführt werden. In diesem verbindet sich das Kreuzgelege 6 mit dem Innenschlauch 4, so dass das Kreuzgelege 6 mit dem Innenschlauch 4 stoffschlüssig fixiert ist.

Anschließend wird die Zwischenlage 7 aufgebracht. Diese wird konzentrisch zur Längsachse X-X auf das Kreuzgelege 6 und den Innenschlauch 4 insbesondere spritztechnisch aufgebracht.

Das Kettengewirk 8 wird mittels Maschinen vorzugsweise in einer Trikot-Bindung ausgebildet und konzentrisch zur Längsachse X-X auf die Zwischenlage 7 aufgebracht. Hierzu durchläuft der Schlauch 1 die Wirk- bzw. Strickmaschine. Das Kettengewirk 8 liegt kraftschlüssig an dem Aussenumfang der Zwischenlage 7 an. Möglich ist, dass der mit dem Kettengewirk 8 versehene Schlauch 1 ebenfalls durch einen Heiztunnel geführt wird, wodurch eine stoffschlüssige Fixierung des Kettengewirkes 8 auf der Zwischenlage 7 erfolgt.

Der Außenmantel 9 wird konzentrisch zur Längsachse X-X auf das Kettengewirk 8 und die Zwischenlage 7 insbesondere spritztechnisch aufgebracht.

Durch das innenliegende Kreuzgelege 6 wird erreicht, dass sich beim Auftragen des Kettengewirkes 8 im Schlauch 1 kein Drall ausbilden kann. Gleichzeitig wird durch die Kombination von Kreuzgelege 6 und Kettengewirk 8 die Innendruckbeständigkeit des Schlauches 1 erhöht.

Der Innenschlauch 4 sowie die Zwischenlage 7 und der Außenmantel 9 bestehen aus einem thermoplastischen Kunststoff, wobei dies vorzugsweise ein Weich-PVC ist. Diese können aber auch aus einem elastomeren Kunststoff, z.B. aus einem Kautschuk bestehen. In dem dargestellten Ausführungsbeispiel weist der Innenschlauch 4 eine Wanddicke von ungefähr 0,8 mm auf, wobei die Zwischenlage 7 und der Außenmantel 9 jeweils eine Wanddicke von ca. 0,7 mm besitzen. Durch die zusätzliche Zwischenlage 7 wird eine erhöhte Sicherheit gegen Leckagen des Schlauches bei Zerstörung des Außenmantels 9 erreicht. Das Kreuzgelege 6 und das Kettengewirk 8 ist aus Fäden hergestellt, die ebenfalls aus einem Kunststoff bestehen. Vorzugsweise bestehen diese Kunststoffäden aus einem Polyester oder einem Polyamid. Diese besitzen insbesondere eine Reißfestigkeit von ungefähr 200 Dtex bis ca. 5000 Dtex.

Die Erfindung ist nicht auf das dargestellte Ausführungsbeispiel beschränkt, sondern umfaßt auch alle im Sinne der Erfindung gleichwirkenden Ausführungen. So könnte die Zwischenschicht ohne die Zwischenlage 7 lediglich aus dem Kreuzgelege 6 gebildet sein. Es ist aber auch möglich anstelle des Kettengewirkes 8 ein zweites Kreuzgelege aufzuwickeln.

## Patentansprüche

1. Schlauch zur Durchleitung eines flüssigen Mediums, vorzugsweise von Wasser, bestehend aus einer einen Hohlraum (2) umschließenden Hülle (3) mit einem mehrlagigen Aufbau, wobei die Hülle (3) einen durchgehenden Innenschlauch (4) aufweist, der von einer Zwischenschicht umschlossen ist, die ein Kettengewirk (8) trägt, das von einem Aussenmantel (9) umfaßt ist,
**dadurch gekennzeichnet, daß** die Zwischenschicht zumindest ein Kreuzgelege (6) aufweist, das zumindest kraftschlüssig mit dem Innenschlauch (4) verbunden ist und aus zwei Fäden gebildet ist, die zueinander gegenläufig spiralartig auf den Außenumfang des Innenschlauches (4) gewickelt sind.

2. Schlauch nach Anspruch 1,
**dadurch gekennzeichnet, daß** das Kreuzgelege (6) unmittelbar auf dem Innenschlauch (4) angeordnet ist.

3. Schlauch nach einem der Ansprüche 1 oder 2,
**dadurch gekennzeichnet, daß** oberhalb des Kreuzgeleges (6) zumindest eine Zwischenlage (7) angeordnet ist, so dass die Zwischenschicht mehrlagig ausgebildet sein kann.

4. Schlauch nach einem der Ansprüche 1 bis 3,
**dadurch gekennzeichnet, daß** das Kettengewirk (8) in Trikot-Bindung ausgebildet ist.

5. Schlauch nach einem der Ansprüche 1 bis 4,
**dadurch gekennzeichnet, daß** der Innenschlauch (4) sowie die Zwischenlage (7) und der Außenmantel (9) aus einem thermoplastischen Kunststoff bestehen.

6. Schlauch nach Anspruch 5,
**dadurch gekennzeichnet, daß** der thermoplastische Kunststoff ein Weich-PVC ist.

7. Schlauch nach einem der Ansprüche 1 bis 4
**dadurch gekennzeichnet, daß** der Innenschlauch (4) sowie die Zwischenlage (7) und der Außenmantel (9) aus einem elastomeren Kunststoff bestehen.

8. Schlauch nach Anspruch 7,
**dadurch gekennzeichnet, daß** der elastomere Kunststoff ein Kautschuk ist.

9. Schlauch nach einem der Ansprüche 1 bis 8,
**dadurch gekennzeichnet, daß** die Zwischenlage (7) auf das Kreuzgelege (6) und den Innenschlauch (4), und der Außenmantel (9) auf das Kettengewirk (8) und die Zwischenlage (9) jeweils konzentrisch zur Längsachse X-X insbesondere spritztechnisch aufgebracht sind.

10. Schlauch nach einem der Ansprüche 1 bis 9,
**dadurch gekennzeichnet, daß** der Innenschlauch (4) eine Wanddicke von ungefähr 0,8 mm besitzt, wobei die Zwischenlage (7) und der Außenmantel (9) jeweils eine Wandstärke von ca. 0,7 mm aufweisen.

11. Schlauch nach einem der Ansprüche 1 bis 10,
**dadurch gekennzeichnet, daß** das Kreuzgelege (6) und das Kettengewirk (8) aus Polyester- und/oder Polyamidfäden bestehen.

12. Schlauch nach Anspruch 11,
**dadurch gekennzeichnet, daß** die Polyester- und/oder Polyamidfäden jeweils eine Reißfestigkeit von ungefähr 200 Dtex bis ca. 5000 Dtex aufweisen.

## Claims

1. A hose for conveying a liquid medium, preferably water, comprising a covering (3) with a multiple-layer structure surrounding a cavity (2), the covering (3) comprising a continuous inner hose (4) which is surrounded by an intermediate layer which carries a warp-knitted fabric (8) which is enclosed by an outer jacket (9), **characterized in that** the intermediate layer comprises at least one cross-lay (6) which is at least frictionally connected to the inner hose (4) and which is formed from two threads which are wound onto the external periphery of the inner hose (4) in the manner of a spiral in opposite directions.

2. A hose according to Claim 1, **characterized in that** the cross-lay (6) is arranged directly on the inner hose (4).

3. A hose according to one of Claims 1 or 2, **characterized in that** at least one intermediate ply (7) is arranged above the cross-lay (6), so that the intermediate layer can be formed with multiple plies.

4. A hose according to any one of Claims 1 to 3, **characterized in that** the warp-knitted fabric (8) is formed in a tricot weave.

5. A hose according to any one of Claims 1 to 4, **characterized in that** the inner hose (4) as well as the intermediate ply (7) and the outer jacket (9) consist of a thermoplastic plastics material.

6. A hose according to Claim 5, **characterized in that** the thermoplastic plastics material is a soft PVC.

7. A hose according to any one of Claims 1 to 4, **characterized in that** the inner hose (4) as well as the intermediate ply (7) and the outer jacket (9) consist of an elastomer plastics material.

8. A hose according to Claim 7, **characterized in that** the elastomer plastics material is a rubber.

9. A hose according to any one of Claims 1 to 8, **characterized in that** the intermediate ply (7) is applied to the cross-lay (6) and the inner hose (4), and the outer jacket (9) to the warp-knitted fabric (8) and the intermediate ply (9) [*sic - recte* (7)] concentrically to the longitudinal axis **X-X** in each case, in particular by spraying.

10. A hose according to any one of Claims 1 to 9, **characterized in that** the inner hose (4) has a wall thickness of approximately 0.8 mm, the intermediate ply (7) and the outer jacket (9) having a wall thickness of approximately 0.7 mm in each case.

11. A hose according to any one of Claims 1 to 10, **characterized in that** the cross-tay (6) and the warp-knitted fabric (8) consist of polyester and/or polyamide threads.

12. A hose according to Claim 11, **characterized in that** the polyester and/or polyamide threads have in each case a tearing resistance of approximately 200 Dtex to approximately 5000 Dtex,

## Revendications

1. Tuyau destiné à la circulation d'une substance liquide, de préférence de l'eau, constitué d'une gaine (3) enveloppant un espace creux (2) ayant une structure à plusieurs couches, la gaine (3) présentant un tuyau intérieur continu (4) qui est enveloppé par une couche intermédiaire qui supporte un tissu tricoté en chaîne (8) qui est entourée par un manteau extérieur (9), **caractérisé en ce que** la couche intermédiaire présente au moins un revêtement croisé (6) qui est relié au moins par adhérence au tuyau intérieur (4) et qui est formé de deux fils qui sont enroulés en sens inverse l'un par rapport à l'autre à la manière d'une spirale sur le périmètre extérieur du tuyau intérieur (4).

2. Tuyau selon la revendication 1, **caractérisé en ce que** le revêtement croisé (6) est agencé directement sur le tuyau intérieur (4).

3. Tuyau selon l'une quelconque des revendications 1 ou 2, **caractérisé en ce qu'**au moins une épaisseur intermédiaire (7) est agencée au-dessus du revêtement croisé (6) de telle sorte que la couche intermédiaire peut être réalisée avec plusieurs couches.

4. Tuyau selon l'une quelconque des revendications 1 à 3, **caractérisé en ce que** le tissu tricoté en chaîne (8) est réalisé dans une armure double-lisse.

5. Tuyau selon l'une quelconque des revendications 1 à 4, **caractérisé en ce que** le tuyau intérieur (4) ainsi que l'épaisseur intermédiaire (7) et le manteau extérieur (9) sont constitués d'une matière synthétique thermoplastique.

6. Tuyau selon la revendication 5, **caractérisé en ce que** la matière synthétique thermoplastique est un PVC mou.

7. Tuyau selon l'une quelconque des revendications 1 à 4, **caractérisé en ce que** le tuyau intérieur (4) ainsi que l'épaisseur intermédiaire (7) et le manteau extérieur (9) sont constitués d'une matière synthétique élastomère.

8. Tuyau selon la revendication 7, **caractérisé en ce que** la matière synthétique élastomère est un caoutchouc.

9. Tuyau selon l'une quelconque des revendications 1 à 8, **caractérisé en ce que** l'épaisseur intermédiaire (7) est disposée sur le revêtement croisé (6) et le tuyau intérieur (4) et le manteau extérieur (9) est disposé sur le tissu tricoté en chaîne (8) et l'épaisseur intermédiaire (9) de façon concentrique par rapport à l'axe longitudinal X-X, en particulier par une technique d'injection.

10. Tuyau selon l'une quelconque des revendications 1 à 9, **caractérisé en ce que** le tuyau intérieur (4) possède une épaisseur de paroi d'environ 0,8 mm, l'épaisseur intermédiaire (7) et le manteau extérieur (9) possédant chacun une épaisseur de paroi de quelque 0,7 mm.

11. Tuyau selon l'une quelconque des revendications 1 à 10, **caractérisé en ce que** le revêtement croisé (6) et le tissu tricoté en chaîne (8) sont constitués de fils de polyester et/ou de polyamide.

12. Tuyau selon la revendication 11, **caractérisé en ce que** les fils de polyester et/ou de polyamide présentent chacun une solidité à la déchirure d'environ 200 Dtex jusqu'à environ 5 000 Dtex.
